# EUROPEAN PATENT APPLICATION

(11) **EP 4 571 867 A1**
(43) Date of publication of application: **18.06.2025**
(21) Application number: 23912891.1
(22) Date of filing: 26.12.2023
(51) Int. Cl.: H01M 4/04, H01M 4/139, H01M 4/66, H01M 4/62

(54) **DRY ELECTRODE MANUFACTURING METHOD AND DRY ELECTRODE MANUFACTURING SYSTEM**

(30) Priority: 26.12.2022 KR 20220185089
(71) Applicant: LG Energy Solution, Ltd., Seoul 07335 (KR)
(72) Inventor: KIM, Min-Chul, Daejeon 34122 (KR)
(74) Representative: Goddar, Heinz J.
(86) International application number: PCT/KR2023/021599
(87) International publication number: WO 2024/144216

(57) **Abstract**

The present disclosure relates to a method for manufacturing a dry electrode and its manufacturing system, and the method for manufacturing the dry electrode of the present disclosure includes (S10) forming a primer layer having a predetermined width on at least one surface of a current collector; (S20) forming a dam on two widthwise sides of the primer layer to prevent an electrode powder from flowing down; (S30) feeding the electrode powder onto a surface of the primer layer; and (S40) compressing the electrode powder to form an electrode active material layer.

## Description

### TECHNICAL FIELD

The present disclosure relates to a method for manufacturing a dry electrode by a powder coating process and its manufacturing system.

The present application claims priority to Korean Patent Application No. 10-2022-0185089 filed on December 26, 2022 in the Republic of Korea, the disclosure of which is incorporated herein by reference.

### BACKGROUND ART

Due to the increasing use of fossil fuels, there is a growing demand for the use of alternative energy and clean energy, and in such circumstances, many studies are being made in the field of energy generation and storage using electrochemistry. Currently, a typical example of electrochemical devices using electrical and chemical energy is secondary batteries, and the range of application of secondary batteries is gradually expanding. One of typical secondary batteries, lithium secondary batteries are used as not only an energy source of mobile devices but also a power source of electric vehicles and hybrid electric vehicles as an alternative to vehicles using fossil fuels such as gasoline vehicles and diesel vehicles that are regarded as one of the main causes of air pollution, and they have a diverse range of application including use as an auxiliary power source via a grid.

In lithium secondary batteries, an electrode manufacturing process includes an electrode material mixing process, an electrode coating process, a drying process, a rolling process, a slitting process and a winding process, and the electrode material mixing process is a process of mixing the components for forming an electrode active material layer, and the electrode material including an electrode active material, a binder, etc. may be mixed with a solvent into a flowable slurry.

Subsequently, the electrode coating process of coating the electrode materials prepared into the slurry on a current collector and the drying process for removing the solvent from the electrode mixture are performed, followed by rolling, to manufacture an electrode with a predetermined thickness.

Meanwhile, defects such as pinholes or cracks may occur in the electrode active material layer due to evaporation of the solvent during the drying. Additionally, the active material layer is not uniformly dried all over the entire inner/outer area, and a powder floating phenomenon is generated due to a difference in solvent evaporation rate, i.e., some regions get dried earlier and powder at the corresponding regions float, and thus form a gap with some other regions get dried later, resulting in low quality of the electrode.

To solve this problem, recently, many studies are being made to manufacture dry electrodes without solvents.

A dry electrode is generally manufactured by preparing an electrode powder including an electrode active material and a binder resin, and coating the electrode powder on the surface of a current collector, followed by compression. The dry electrode manufactured by the dry manufacturing method has uniform binder resin distribution in the thickness direction of the electrode active material layer and fewer defects such as pinholes or cracks, compared to the slurry coating method. However, when coating the electrode powder on the current collector, the electrode powder may flow down at the edge of the electrode active material layer, or the electrode powder may be pressed out at the edge of the electrode active material layer during compression, resulting in uneven side finishes.

Therefore, there is an urgent need for development of dry electrode manufacturing technology to solve the problem.

### SUMMARY

### Technical Problem

The present disclosure is directed to providing a method for manufacturing a dry electrode with improved edge quality of an electrode active material layer.

The present disclosure is further directed to providing a system for manufacturing a dry electrode with improved edge quality of an electrode active material layer.

It will be easily understood that these and other objectives and advantages of the present disclosure may be realized by the means or methods set forth in the appended claims and a combination thereof.

### Technical Solution

According to an aspect of the present disclosure, there is provided a method for manufacturing a dry electrode of the following embodiments.

The method for manufacturing the dry electrode according to a first embodiment includes (S10) forming a primer layer having a predetermined width on at least one surface of a current collector; (S20) forming a dam on two widthwise sides of the primer layer to prevent an electrode powder from flowing down; (S30) feeding the electrode powder onto a surface of the primer layer; and (S40) compressing the electrode powder to form an electrode active material layer.

According to a second embodiment, in the first embodiment, the dam may extend outward from the current collector surface, have a height that is greater than a height of the primer layer and be disposed in close contact with the sides of the primer layer without a gap.

According to a third embodiment, in the first or second embodiment, the method for manufacturing the dry electrode may further include, after the step (S40) is performed, (S50) removing the electrode active material layer protruding out of the dam.

According to a fourth embodiment, in any one of the first to third embodiments, the step (S50) may be performed by laser irradiation or knife type etching.

According to a fifth embodiment, in any one of the first to fourth embodiments, the dam may include a material that does not change physical and chemical properties of the primer layer and the electrode powder when it contacts the primer layer and the electrode powder.

According to a sixth embodiment, in any one of the first to fifth embodiments, the dam may include a polymer material.

According to a seventh embodiment, in any one of the first to sixth embodiments, the step (S20) may be performed by printing.

According to an eighth embodiment, in any one of the first to seventh embodiments, the electrode powder may include an electrode active material and a binder resin for the electrode.

According to a ninth embodiment, in any one of the first to eighth embodiments, the electrode powder may be produced by spray drying.

According to a tenth embodiment, in any one of the first to ninth embodiments, the primer layer may include a conductive material for the primer layer and a binder resin for the primer layer.

According to another aspect of the present disclosure, there may be provided a dry electrode of the following embodiments.

The dry electrode according to an eleventh embodiment is a dry electrode obtained by the method for manufacturing the dry electrode according to any one of the first to tenth embodiments, and includes the current collector, and the electrode active portion on at least one surface of the current collector, wherein the electrode active portion includes the primer layer and the electrode active material layer on the primer layer, and wherein the dam covers all or at least part of the side of the electrode active portion.

According to a twelfth embodiment, in the eleventh embodiment, the dam may have a height that is equal to or lower than the electrode active portion.

According to a thirteenth embodiment, in the eleventh or twelfth embodiment, the dam may include a material that does not change physical and chemical properties of the primer layer and the electrode powder when it contacts the primer layer and the electrode powder.

### Advantageous Effects

In the dry manufacturing method of the present disclosure, when coating the electrode powder, the dam at the two widthwise ends of the electrode active material layer may prevent the electrode powder from flowing down, and thus have a beneficial effect on edge control to avoid uneven edges.

Therefore, according to the dry manufacturing method of the present disclosure, it may be possible to prevent the electrode powder from bulging out of the edges of the electrode in a calendaring process, thereby forming the electrode active material layer having uniform and even edges.

Therefore, according to the method for manufacturing the dry electrode of the present disclosure, it may be possible to provide the dry electrode with high quality.

### BRIEF DESCRIPTION OF THE DRAWINGS

The accompanying drawings illustrate exemplary embodiments of the present disclosure and together with the foregoing description, serve to provide a further understanding of the technical aspect of the present disclosure, and thus the present disclosure should not be construed as being limited to the accompanying drawings.
FIG. 1 schematically shows a comparative example of manufacturing a dry electrode without a dam.
FIG. 2 schematically shows a primer layer on a surface of a current collector.
FIG. 3a is a side view schematically showing an electrode having a dam at two widthwise ends of a primer layer in a method for manufacturing a dry electrode according to an embodiment of the present disclosure.
FIG. 3b is a top view schematically showing an electrode having a dam at two widthwise ends of a primer layer in a method for manufacturing a dry electrode according to an embodiment of the present disclosure. Referring to FIG. 3b, in an embodiment of the present disclosure, the dam may be parallel to a travel direction of the electrode manufacturing process.
FIG. 4 schematically shows an electrode powder coated between dams in a method for manufacturing a dry electrode according to an embodiment of the present disclosure.
FIG. 5 schematically shows an electrode active material layer formed by compressing a coated electrode powder in a method for manufacturing a dry electrode according to an embodiment of the present disclosure.
FIG. 6 schematically shows the removal of an electrode active material layer 104 protruding out of a dam 121 by laser irradiation in a method for manufacturing a dry electrode according to an embodiment of the present disclosure. Referring to FIG. 6, according to an embodiment of the present disclosure, all or part of the dam may be removed by the laser irradiation 201.
FIG. 7 schematically shows a method for manufacturing a dry electrode by a roll-to-roll continuous process in an embodiment of the present disclosure.
FIG. 8 schematically shows a process of performing the step (S50) of removing an electrode active material layer protruding out of a dam through laser irradiation according to an embodiment of the present disclosure. In FIG. 8, the arrow indicates a travel direction of an electrode in the manufacturing process.

### DETAILED DESCRIPTION

Hereinafter, the present disclosure will be described in detail. However, the present disclosure is not limited to the following description, and if necessary, each element may be variously modified or selectively used in combination. Accordingly, it should be understood that the present disclosure includes all changes, equivalents or substituents included in the technical aspect and scope of the present disclosure.

The term 'comprise' when used in this specification, specifies the presence of stated elements, but does not preclude the presence or addition of one or more other elements, unless the context clearly indicates otherwise.

In addition, the terms 'about' and 'substantially' as used herein are used in the sense of at a value, or nearly at a value, when given the manufacturing and material tolerances inherent in the stated circumstances, and are used to prevent the unscrupulous infringer from unfairly taking advantage of the present disclosure where exact or absolute figures are stated as an aid to understanding the present disclosure.

Throughout the specification, 'A and/or B' refers to either A or B or both.

The terminology used herein is for the purpose of convenience, but not intended to be limiting. For example, the terms 'upper', 'lower', 'left', 'right', 'front', 'rear', 'inner' and 'outer' may be used to describe relative locations or directions between elements rather than absolute positions or to indicate locations or directions in the drawings to which reference is made. In addition to themselves, these terms include words including them and derivatives and words having a similar meaning thereof as well.

The term "glass transition temperature (Tg)" used herein is measured by methods commonly used in the corresponding field, and for example, may be measured by differential scanning calorimetry (DSC).

The term "porosity" as used herein refers to a fraction of voids in a structure over the total volume and is indicated in vol%, and may be used interchangeably with void fraction, void ratio or the like.

In the present disclosure, the measurement of the porosity is not limited to a particular method, and according to an embodiment of the present disclosure, for example, the porosity may be measured by the Brunauer-Emmett-Teller (BET) method using nitrogen gas, mercury permeation method (Hg porosimeter) or ASTM D-2873. Alternatively, the net density of a separator may be calculated from the density (apparent density) of the separator, a composition ratio of materials included in the separator and the density of each component and the porosity of the separator may be calculated from a difference between the apparent density and the net density.

The term "average particle size (D₅₀)" as used herein refers to a particle size at the point of 50% of cumulative particle size distribution of particles, and the particle size may be measured using laser diffraction method. Specifically, the particle size distribution is calculated by dispersing target powder in a dispersion medium, feeding it into a commercially available laser diffraction particle size measurement device (for example, Microtrac S3500) and measuring a diffraction pattern difference according to the particle size when particles pass through a laser beam. In the measurement device, the particle size D₅₀ may be measured by calculating the particle diameter at the point of 50% of the cumulative particle size distribution of particles.

The "thickness" of each layer included in the electrode as used herein may indicate a value measured by known thickness measurement methods. The thickness may be, for example, a value measured using a thickness measurement device (Mitutoyo, VL-50S-B) although the thickness measurement method is not limited thereto.

The "specific surface area" as used herein may refer to a value measured by known methods for measuring the specific surface area. The specific surface area may be, for example, a value measured by a flowable or fixed method although the method for measuring the specific surface area is not limited thereto.

A method for manufacturing a dry electrode will be described in more detail below.

### <Method for manufacturing dry electrode>

In the present disclosure, a method for manufacturing a dry electrode refers to a method for manufacturing a dry electrode including a process of preparing an electrode powder in powder state and compressing it to form an electrode active material layer.

Additionally, in the present disclosure, the dry electrode refers to an electrode manufactured by the method for manufacturing the dry electrode.

The dry electrode and the method for manufacturing the dry electrode do not involve solvents in the electrode manufacturing process as opposed to an electrode manufacturing method including mixing electrode materials with a solvent to prepare a slurry or a wet intermediate product, coating it on the surface of a current collector and drying it and an electrode manufactured by the same.

Meanwhile, in the present disclosure, the dry electrode may be an electrode for an electrochemical device, and the electrochemical device may include any device in which electrochemical reaction takes place. In a specific example, the electrochemical device may include any type of primary battery, secondary battery, fuel cell, solar cell or capacitor such as super capacity. In the present disclosure, the electrochemical device may be preferably a secondary battery, and more preferably a lithium ion secondary battery.

A method for manufacturing a dry electrode according to an aspect of the present disclosure includes:
(S10) forming a primer layer having a predetermined width on at least one surface of a current collector;
(S20) forming a dam on two widthwise sides of the primer layer to prevent an electrode powder from flowing down;
(S30) feeding the electrode powder onto the surface of the primer layer; and
(S40) compressing the electrode powder to form an electrode active material layer.

Each step will be described in detail below.

### (S10)

First, the current collector is prepared, and the primer layer having the predetermined width is formed on one or two surfaces of the current collector (S10).

The current collector is not limited to a particular type and may include those having high conductivity without causing any chemical change in the battery. In an embodiment of the present disclosure, the current collector may include, for example, stainless steel, aluminum, nickel, titanium, sintered carbon, copper or aluminum or stainless steel treated with carbon, nickel, titanium or silver on the surface. The current collector may have microtexture on the surface to increase the adhesion strength of the positive electrode active material, and may come in various forms, for example, a film, a sheet, a foil, a net, a porous body, a foam, a nonwoven.

The current collector includes an uncoated portion at all or some of the edges. The uncoated portion does not have a primer layer/an electrode active material layer and its surface is exposed. The uncoated portion itself may be used as an electrode tab, or may be connected to an electrode tab.

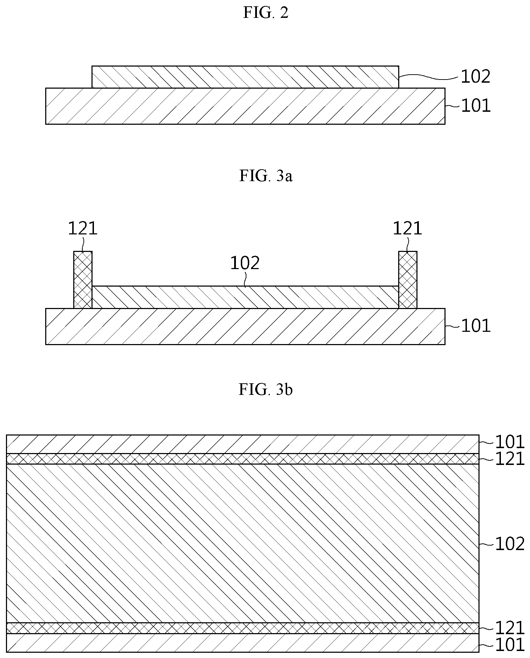

FIG. 2 is a cross-sectional view schematically showing the current collector having the primer layer on the surface in the process of manufacturing the dry electrode according to an embodiment of the present disclosure. Referring to this figure, the current collector has the uncoated portion having a predetermined width inwards from each of two widthwise edges on one surface, and the primer layer is present between the uncoated portions.

According to an embodiment of the present disclosure, the primer layer may include a conductive material and a binder resin. The primer layer will be described in detail below.

### (S20)

Subsequently, the dam is formed on the two widthwise sides of the primer layer to prevent the electrode powder from flowing down (S20).

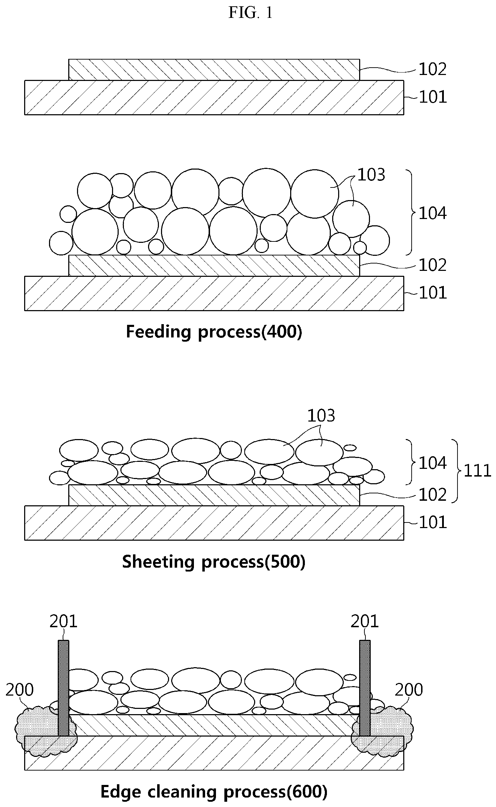

FIG. 1 is a flowchart of a method for manufacturing a dry electrode using the electrode powder without the step of forming the dam. Referring to FIG. 1, the electrode powder 103 is coated on the primer layer 102 present on one surface of the current collector 101 to prepare the electrode active material layer 104. In this instance, in a feeding process 400 of coating the electrode powder, the electrode powder flows down out of the primer layer, or in a sheeting process 500, the electrode active portion 111 is formed with the electrode powder bulging out from the primer layer by rolling. To etch and trim the edge of the electrode active material layer 104 protruding out of the primer layer, when etching through laser irradiation in a subsequent edge cleaning process 600, the laser may reach the current collector 101 and the primer layer 102, causing damage to an unwanted area 200.

According to an aspect of the present disclosure, the method for manufacturing the dry electrode may be provided to solve this problem.

FIGs. 3a and 3b are side and top views schematically showing the electrode having the dam 121 at the two widthwise ends of the primer layer 102 on one surface of the current collector 101 in the method for manufacturing the dry electrode according to an embodiment of the present disclosure, respectively.

Referring to FIGs. 3a and 3b, the dam 121 may be formed on at least part of the side of the primer layer 102, but may be preferably formed over the entire side of the primer layer for uniformity in the edge quality of the electrode.

Additionally, in an embodiment of the present disclosure, the width of the dam may be smaller than the width of the uncoated portion.

In an embodiment of the present disclosure, the dam is preferably in close contact with the side of the primer layer without a gap to prevent the electrode powder from going in between the primer layer and the dam when coating the electrode powder in the following step.

In an embodiment of the present disclosure, the dam may be formed with a height that is equal to or lower than the height of the electrode active portion.

In the present disclosure, the electrode active portion is used to indicate a stack of the primer layer and the electrode active material layer.

The dam plays a role in controlling the position to stay the electrode powder on the primer layer and prevent the electrode powder from bulging out from the primer layer when coating the electrode powder on the primer layer, and accordingly, preferably, the dam extends outward from the current collector surface and the height of the dam is higher than the height of the primer layer.

Meanwhile, in the present disclosure, the dam preferably includes any material that does not change the physical and chemical properties of the primer layer and the electrode powder when it contacts the primer layer and the electrode powder.

In an embodiment of the present disclosure, the dam is not a component of the battery involved in electrochemical activity and may be used to help the electrode to have a predetermined shape when manufacturing the electrode. Accordingly, preferably, the dam does not cause damage to the electrode, and does not have any physical/chemical influence on the electrode materials such as the electrode active material.

In an embodiment of the present disclosure, the dam may include at least one of an insulating polymer material or an inorganic material. For example, the dam may include the insulating polymer material and the inorganic material in an amount of 90 wt% or more based on 100 wt% of the dam, or the dam may consist of the insulating polymer material and/or the inorganic material.

The insulating polymer material may include, for example, polyethylene (PE), polypropylene (PP), polybutylene (PB), polystyrene (PS), polyethylene terephthalate (PET), natural rubber and synthetic rubber, but is not limited thereto.

For example, the inorganic material may include, without limitation, any inorganic material that is electrochemically stable without oxidation and/or reduction reaction in the operating voltage range (for example, 0 to 5V based on Li/Li+) of the battery. Non-limiting examples of the inorganic material may include at least one selected from BaTiO₃, Pb(Zr,Ti)O₃ (PZT), Pb₁₋ₓLaₓZr_{1-y}Ti_{y}O₃ (PLZT), PB(Mg₃Nb_{2/3})O₃-PbTiO₃ (PMN-PT), hafnia (HfO₂), SrTiO₃, SnO₂, CeO₂, MgO, NiO, CaO, ZnO, ZrO₂, Y₂O₃, Al₂O₃, TiO₂ and SiC, but is not limited thereto.

FIG. 3a is a side view of the electrode having the dam at the two widthwise ends of the primer layer. Referring to FIG. 3a, it is confirmed that the height of the dam is higher than the height of the primer layer.

Meanwhile, FIG. 3b is a top view showing the primer layer and the dam on the surface of the current collector. Referring to this figure, the uncoated portion having the predetermined width is present at the two widthwise ends of the current collector, the primer layer is present between the uncoated portions, and the dam is disposed in close contact with the primer layer at the two ends of the primer layer.

The structure shown in FIG. 3b schematically shows a long strip-shaped sheet manufactured by a roll-to-roll continuous process. After it is manufactured, the electrode may be cut at a predetermined interval and used as a unit electrode having a predetermined size, or may be wound together with a strip-shaped separator and a counter electrode to form an electrode assembly of a jellyroll structure.

In an embodiment of the present disclosure, the width of the dam may be determined, taking into account the size of the electrode powder.

For example, when the average particle size (D₅₀) of the electrode powder is d1, the width of the dam may, for example, satisfy 0.80 d1 ≤ the width of the dam ≤ 1.20 d1.

In an embodiment of the present disclosure, as described below, the electrode powder may have the particle size in a range between 0.1 and 1,000 *µ*m. For example, the average particle size (D₅₀) of the electrode powder may be from 10 *µ*m to 500 *µ*m, specifically from 15 *µ*m to 200 *µ*m, from 15 *µ*m to 100 *µ*m, or from 30 *µ*m to 80 *µ*m, for example, from 40 *µ*m to 60 *µ*m, or from 45 *µ*m to 55 *µ*m, or from 45 *µ*m to 50 *µ*m.

In an embodiment of the present disclosure, the dam may have the width of up to 100 *µ*m.

In an embodiment of the present disclosure, the height of the dam may be determined, taking into account the height of the electrode active portion.

For example, the height of the dam may be preferably higher than the height of the primer layer. Additionally, considering the subsequent rolling process of the electrode active material layer, the height of the dam may be preferably lower than the height of the electrode active material layer.

In an embodiment of the present disclosure, the dam may have the height of up to 50 *µ*m. However, the width or height of the dam is not limited to the aforementioned range and may be set to an appropriate range, taking into account the width of the current collector, the width or height of the electrode active material layer, the particle size of the electrode powder, etc.

Meanwhile, in an embodiment of the present disclosure, the dam may be formed by coating a dam forming ink (a dam forming composition) on the side of the primer layer using a coater such as an inkjet printer.

In this instance, the dam is preferably formed in close contact with the side of the primer layer without a gap.

### (S30)

Subsequently, the electrode powder is fed onto the primer layer surface (S30).

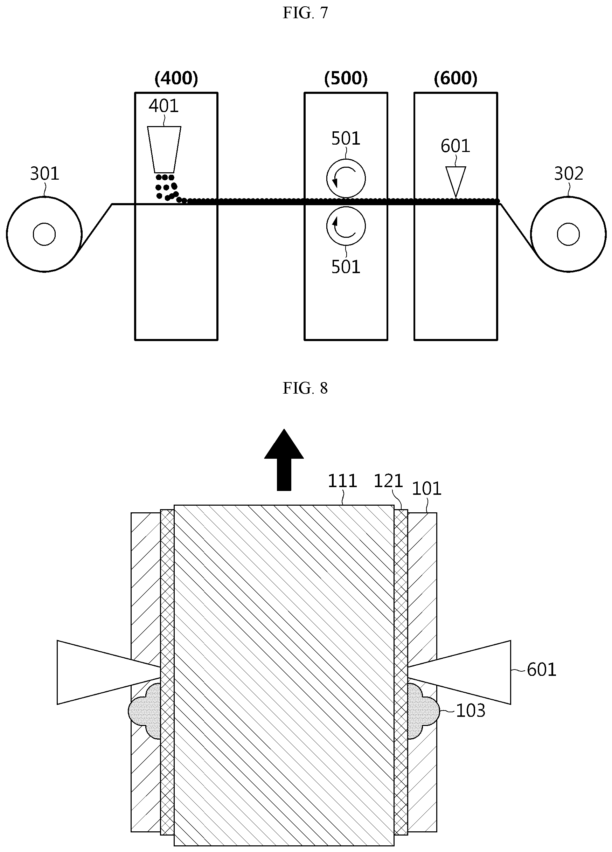

Referring to FIG. 7, the current collector having the primer layer and the dam is fed into the process of manufacturing the dry electrode by the roll-to-roll continuous process and the electrode powder is fed onto the surface of the primer layer through an electrode powder feeder 401 (the feeding process, 400). When coating the electrode powder, the space in which the electrode powder may be disposed is restricted by the dam, thus as a result, the electrode powder may be positioned on the surface of the primer layer without bulging out from the primer layer.

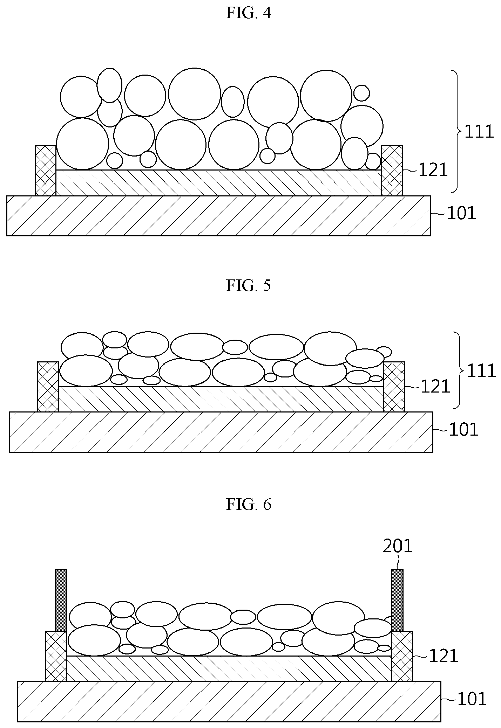

FIG. 4 schematically shows the electrode active portion 111 in which the electrode powder is positioned on the surface of the primer layer without bulging out by the dam.

The electrode powder feeder is not limited to a particular type and may include a screw feeder.

Meanwhile, in an embodiment of the present disclosure, the electrode powder applied to the current collector may undergo uniform thickness adjustment using a blade, and be fed into a press machine.

### (S40)

Subsequently, the electrode powder is compressed to form the electrode active material layer of layered structure (S40).

In an embodiment of the present disclosure, the step (S40) may be performed by applying the pressure to the electrode powder by a pair of sheeting rolls.

Referring to FIG. 5, the electrode powder is compressed by the applied pressure so the electrode powder particles are tightly packed to form the electrode active material layer, and compared to before the compression, the total volume (apparent volume) decreases and the density increases.

In this step, the dam fixes the shape of the electrode active material layer at the two widthwise ends of the electrode active material layer, thereby preventing the electrode powder from being pressed out the primer layer or reducing the quantity of electrode powder pressed out.

As the coated electrode powder is all included in the electrode active material layer, it may be possible to prevent the reduction in energy density of the electrode.

Meanwhile, referring to FIG. 7, after the electrode powder is coated on the primer layer surface, in the sheeting process 500, the electrode powder is pressed while passing between the pair of sheeting rolls 501 to form the electrode active material layer of layered structure.

In an embodiment of the present disclosure, to remove a difference in thickness of the formed electrode and increase the density of the electrode active material layer to achieve high capacity, the pressing may be performed twice or more times, if necessary.

In an embodiment of the present disclosure, in the roll pressing process using the press rollers, two cylindrical rolls may be vertically arranged in parallel at a small interval, and the electrode may be placed between the rolls, brought into contact, and pressed by rotating the rolls in the opposite directions. The rolls may perform heating or cooling temperature adjustment.

During the pressing, the temperature of the electrode powder and/or the electrode active material layer may be, for example, controlled in a range between 0°C and 200°C. The temperature control may be transmitted to the electrode powder and/or the electrode active material layer by the press rollers. Preferably, the temperature may be higher than the melting point or glass transition temperature of a binder resin for the electrode, and more preferably, may be higher by 20°C or more than the melting point or glass transition temperature. The molding rate of the press forming may be usually from 0.1 to 20 m/min, or from 1 to 10 m/min. Additionally, the press line pressure between rolls may be usually, for example, from 0.2 to 30 kN/cm, or from 0.5 to 10 kN/cm.

### (S50)

Meanwhile, in a specific embodiment of the present disclosure, after the step (S40) is performed, the method may further include the step of trimming the side of the electrode active material layer. In the present disclosure, it may be referred to as an edge cleaning process.

The trimming may be performed to remove the electrode powder bulging out of the limited space of the dam when pressing in the above-described step and/or to make the side surface of the electrode active material layer less rough and even.

In an embodiment of the present disclosure, the step (S50) may be performed to remove the electrode active material layer protruding out of the dam after the step (S40) is performed.

In an embodiment of the present disclosure, the trimming may be performed by laser irradiation. However, the method used is not limited to laser irradiation and may include any method for trimming without causing damage to the electrode active material layer. When performing the surface trimming process by laser irradiation, the metal foil used as the current collector may deteriorate by laser irradiation, but in the process of manufacturing the dry electrode according to the present disclosure, due to the presence of the dam on the current collector surface, it may be possible to prevent damage to the current collector due to direct laser irradiation onto the current collector surface. Another means may be, for example, a knife type etching method. The knife type etching method may be, for example, performed by cutting a ragged electrode powder coating area using a blade and removing the cutout area through an air knife and a suction. In this instance, the blade may be a rotating circular blade, but the present disclosure is not limited thereto.

In an embodiment of the present disclosure, the laser irradiation may be performed on two sides of the sheet-type dry electrode. The laser irradiation may be performed first on one side, then the other side. The laser irradiation may be performed on the two sides at the same time.

Referring to FIG. 8, the laser irradiation may be performed on the two sides of the sheet-type dry electrode.

In this instance, in the laser irradiation, the side of the electrode active material layer may be trimmed to prevent unevenness.

### <Electrode powder>

In the present disclosure, the electrode powder refers to a powdery material including composite particles including an electrode active material and a binder resin for the electrode. Here, the composite particles are formed by binding the electrode active material by the binder resin for the electrode.

In an embodiment of the present disclosure, the electrode active material may be present in an amount of 80 wt% or more, or 90 wt% or more of the total weight of the electrode powder. Additionally, the binder resin for the electrode may be included in an amount of 20 wt% or less, or 10 wt% or less of the total weight of the electrode powder.

Meanwhile, in an embodiment of the present disclosure, optionally, the electrode powder may further include a conductive material for the electrode. The conductive material for the electrode may be included in a range of 10 wt% or less based on 100 wt% of the electrode powder.

Meanwhile, in an embodiment of the present disclosure, the electrode powder may have an aspect ratio of from 0.5 to 1.0. The aspect ratio may refer to a ratio of the average long axis length to the average short axis length of the electrode powder, and in this instance, the average short axis length refers to the average length value in the axial direction having the shortest length of the electrode powder, and the average long axis length refers to the average length value in the axial direction having the longest length of the electrode powder. When the aspect ratio of the composite particles satisfies the aforementioned range, it may have a beneficial effect on the electrode powder having sufficient flowability suitable for the process.

Meanwhile, in an embodiment of the present disclosure, the particle size of the electrode powder may be in a range between 0.1 and 1,000 *µ*m.

In a specific embodiment, the average particle size (D₅₀) of the electrode powder may be in a range between 10 *µ*m and 500 *µ*m, specifically 15 *µ*m and 200 *µ*m, 15 *µ*m and 100 *µ*m, or 30 *µ*m and 80 *µ*m, for example 40 *µ*m and 60 *µ*m, or 45 *µ*m and 55 *µ*m, 45 *µ*m and 50 *µ*m.

In another embodiment, the average particle size (D₅₀) of the electrode powder may be in a range between 50 *µ*m and 500 *µ*m, or 50 *µ*m and 100 *µ*m.

### <Structure of dry electrode>

The present disclosure relates to a dry electrode obtained by the above-described method for manufacturing the dry electrode.

The dry electrode includes a current collector, and an electrode active portion on at least one surface of the current collector.

The electrode active portion includes a primer layer, and an electrode active material layer on the primer layer.

The electrode active portion has the above-described dam on all or at least part of the side.

The dam is preferably disposed in close contact with the side of the electrode active portion without a gap.

In an embodiment of the present disclosure, the dam may be formed with the height that is equal to or lower than the electrode active portion.

In an embodiment of the present disclosure, considering the subsequent pressing process of the electrode active material layer, the height of the dam may be preferably lower than the height of the electrode active portion.

Referring to FIG. 6, the dry electrode has the electrode active portion including the primer layer and the electrode active material layer stacked on the surface of the current collector in a sequential order, and the dam having the predetermined thickness is disposed in close contact with the side of the electrode active portion without a gap.

### <Electrode active material layer>

In an embodiment of the present disclosure, the electrode active material layer includes the electrode active material and the binder resin for the electrode. As described above, the electrode materials may be included in the form of the composite particles.

In an embodiment of the present disclosure, the electrode active material layer may include the electrode powder in an amount of 95 wt% or more based on 100 wt% of the electrode active material layer. Meanwhile, the electrode active material layer may further include free electrode active material particles originating from the electrode powder and/or the binder resin for the electrode.

Meanwhile, in an embodiment of the present disclosure, the electrode active material layer may further include the conductive material for the electrode. The conductive material for the electrode may be conductive material particles for the electrode included in the electrode powder or free conductive material particles for the electrode.

The electrode active material layer includes the electrode powder packed in a layered structure, and the electrode powder has pores defined by interstitial volume or space between the electrode powder particles, and has a porous property derived from this structure.

In an embodiment of the present disclosure, the electrode active material layer preferably has the porosity of from 20 vol% to 40 vol% in view of electrolyte wetting, shape stability and ionic conductivity.

### <Electrode material>

In an embodiment of the present disclosure, when the dry electrode is used as a positive electrode, the electrode powder may include a positive electrode active material.

The positive electrode active material may include any type of lithium transition metal oxide, lithium metal iron phosphate or metal oxide, for example, layered compounds such as lithium cobalt oxide (LiCoO₂), lithium nickel oxide (LiNiO₂) or compounds with one or more transition metal substitution; lithium manganese oxide of Formula Li₁₊ₓMn₂₋ₓO₄ (where x is from 0 to 0.33), LiMnO₃, LiMn₂O₃, LiMnO₂; lithium copper oxide (Li₂CuO₂); vanadium oxide such as LiV₃O₈, LiV₃O₄, V₂O₅, Cu₂V₂O₇; Ni site lithium nickel oxide represented by Formula LiNi₁₋ₓMₓO₂ (where M = Co, Mn, Al, Cu, Fe, Mg, B or Ga, x = 0.01 to 0.3); lithium manganese composite oxide represented by Formula LiMn₂₋ₓMₓO₂ (where M = Co, Ni, Fe, Cr, Zn or Ta, x = 0.01 to 0.1) or Li₂Mn₃MO₈ (where M = Fe, Co, Ni, Cu or Zn); Li₁₊ₓ(NiₐCo_{b}Mn_{c}Al_{d})₁₋ₓO₂ with partial substitution of aluminum ion for Li in the Formula (x = 0 to 0.03, a = 0.3 to 0.95, b = 0.01 to 0.35, c = 0.01 to 0.5, d = 0.001 to 0.03, a+b+c+d=1); lithium metal phosphate LiM_{P}O₄ (where M = Fe, CO, Ni, or Mn), disulfide compounds; Fe₂(MoO₄)₃, but is not limited thereto.

In another embodiment of the present disclosure, when the dry electrode is used as a negative electrode, the electrode powder may include a negative electrode active material.

The negative electrode active material may include, for example, carbon such as nongraphitizing carbon, graphite-based carbon; metal composite oxide such as LiₓFe₂O₃(0≤x≤1), LiₓWO₂(0≤x≤1), SnₓMe₁₋ₓMe'_{y}O_{z} (Me: Mn, Fe, Pb, Ge; Me': Al, B, P, Si, Groups 1, 2 and 3 elements in the periodic table, halogen; 0<x≤1; 1≤y≤3; 1≤z≤8); lithium metals; lithium alloys; silicon-based alloys; tin-based alloys; silicon-based oxide such as SiO, SiO/C, SiO₂; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymer such as polyacetylene; Li-Co-Ni based materials, but is not limited thereto.

The conductive material for the electrode is not limited to a particular type and may include any material having conductive properties without causing any chemical change in the corresponding battery, for example, graphite such as natural graphite or artificial graphite; carbon black such as carbon black, acetylene black, Ketjen black, channel black, furnace black, lamp black, thermal black; conductive fibers such as carbon fibers or metal fibers; fluorocarbon; metal powder such as aluminum powder, nickel powder; conductive whiskers such as zinc oxide, potassium titanate; conductive metal oxide such as titanium oxide; a conductive materials such as polyphenylene derivatives, but specifically, to uniformly mix the electrode conductive material and improve conductivity, the conductive material for the electrode may include at least one selected from the group consisting of activated carbon, graphite, carbon black and carbon nanotubes, and more specifically, activated carbon.

In the present disclosure, the binder resin for the electrode may include, without limitation, any type of binder resin used as binder materials for electrochemical devices, and may include, for example, diene-based polymer, acrylate-based polymer, fluorine-based polymer, styrene-based polymer or two or more of them.

Examples of the diene-based polymer may include polymer including a monomer unit derived from conjugated diene such as butadiene and isoprene and its hydrogenated form. A ratio of the conjugated diene-derived monomer unit in the diene-based polymer may be usually 40 wt% or more, preferably 50 wt% or more, and more preferably 60 wt% or more.

Specifically, the diene-based polymer may include conjugated diene homopolymer such as polybutadiene or polyisoprene; aromatic vinyl-conjugated diene copolymer such as styrene-butadiene copolymer (SBR) with carboxyl modification; vinyl cyanide-conjugated diene copolymer such as acrylonitrile-butadiene copolymer (NBR); hydrogenated SBR, hydrogenated NBR.

The styrene-based polymer may include polymer having a styrene monomer-derived repeating unit, for example, styrene homopolymer (polystyrene), styrene copolymer. Examples of the styrene copolymer may include block copolymer such as styrene-ethylene-butadiene copolymer, styrene-butadiene-propylene copolymer, styrene-isoprene copolymer, styrene acrylate-n-butyl itaconate-methyl methacrylate-acrylonitrile copolymer, styrene acrylate-n-butyl itaconate-methyl methacrylate-acrylonitrile copolymer, styrene-butadiene block copolymer, styrene-butadiene-styrene·block copolymer, styrene-ethylene-butylene-styrene·block copolymer, styrene-isoprene·block copolymer, styrene-ethylene-propylene-styrene·block copolymer.

Example of the acrylate-based polymer may include polymer including a monomer unit derived from acrylic acid ester and/or methacrylic acid ester. A ratio of the monomer unit derived from acrylic acid ester and/or methacrylic acid ester in the acrylate-based polymer may be usually 40 wt% or more, preferably 50 wt% or more, and more preferably 60 wt% or more. Specific example of the acrylate-based polymer may include cross-linked acrylate-based polymer such as an acrylic acid 2-ethylhexyl-methacrylic acid-acrylonitrile-ethyleneglycoldimethacrylate copolymer, an acrylic acid 2-ethylhexyl-methacrylic acid-methacrylonitrile-diethyleneglycoldimethacylate copolymer, an acrylic acid 2-ethylhexyl-styrene-methacrylic acid-ethyleneglycoldimethacylate copolymer, a butyl acrylate-acrylonitrile-diethyleneglycoldimethacylate copolymer and a butyl acrylate-acrylic acid-trimethylolpropanetrimethacrylate copolymer; a copolymer of ethylene and (meth)acrylic acid ester such as an ethylene-methyl acrylate copolymer, an ethylene-methyl methacrylate copolymer, an ethylene-ethyl acrylate copolymer and an ethylene-ethyl methacrylate copolymer; a graft polymer with a radically polymerizable monomer grafted onto the copolymer of ethylene and (meth)acrylic acid ester. Meanwhile, the radically polymerizable monomer used in the graft polymer may include, for example, methyl methacrylate, acrylonitrile, methacrylic acid. Besides, the copolymer of ethylene and (meth)acrylic acid such as an ethylene-acrylic acid copolymer, an ethylene-methacrylic acid copolymer may be used as a dispersible binder.

The fluorine-based polymer may include polyvinylidene fluoride (PVdF), polytetrafluoroethylene (PTFE) and polyvinylidene fluoride-based copolymer such as PVDF-HFP, specifically polytetrafluoroethylene (PTFE).

In an embodiment of the present disclosure, when the electrode is a positive electrode, the positive electrode binder may include a fluorine-based copolymer. In a specific embodiment, the positive electrode may include the fluorine-based copolymer, for example, PTFE, and more preferably 60 wt% or more of PTFE based on the total weight of the binder. Meanwhile, the positive electrode binder may further include other fluorine-based copolymer than PTFE, a styrene-based copolymer, a polyolefin-based copolymer, polyethylene oxide (PEO), an acrylate-based copolymer.

Meanwhile, in an embodiment of the present disclosure, when the electrode is a negative electrode, the negative electrode binder may include at least one of diene-based polymer or styrene-based polymer and it may be included in an amount of 60 wt% or more based on the total weight of the binder. In a specific embodiment, the negative electrode may include the styrene-butadiene block copolymer in an amount of 60 wt% or more based on the total weight of the binder. Meanwhile, the negative electrode binder may further include a fluorine-based copolymer, a polyolefin-based copolymer, polyethylene oxide (PEO), an acrylate-based copolymer.

Meanwhile, in the present disclosure, the binder resin for the electrode may include diene-based polymer and cross-linked acrylate-based polymer since it is possible to obtain the active material layer having good binding to the current collector or good surface smoothness and manufacture the electrode for the electrochemical device with high capacitance and low internal resistance.

The binder resin for the electrode is not limited to a particular shape, but a particulate shape is preferred since the binding performance is good and it is possible to suppress the decline in capacitance of the manufactured electrode or degradation over the repeated charges/discharges. The particulate binder resin for the electrode may include, for example, dispersible binder particles dispersed in water like latex, or powder obtained by drying the dispersion. The particulate binder may be preferably included in the negative electrode.

Meanwhile, in some cases, the electrode active material layer may further include fillers to suppress the expansion of the electrode active material layer, and the fillers are not limited to a particular type and may include any fibrous material that does not cause any chemical change in the corresponding battery, for example, olefin-based polymer such as polyethylene, polypropylene; and fibrous materials such as glass fibers, carbon fibers.

### <Primer layer>

The primer layer includes a binder resin for the primer layer and a conductive material for the primer layer, and optionally a dispersant. The binder resin for the primer layer may include, without limitation, any known binder used in the primer layer.

The binder resin for the primer layer may include, for example, styrene butadiene rubber (SBR), butadiene rubber (BR), nitrile butadiene rubber (NBR), styrene butadiene styrene block polymer (SBS), styrene ethylene butadiene block polymer (SEB), styrene-(styrene butadiene)-styrene block polymer, natural rubber (NR), isoprene rubber (IR), ethylene-propylene-diene terpolymer (EPDM), poly(ethylene-co-propylene-co-5-methylene-2-norbornene, polytetrafluoroethylene (PTFE), polyvinylidene fluoride, polyvinyl chloride, polyvinylidene fluoride-co-hexafluoropropylene, polyvinylidene fluoride-co-trichloroethylene, polymethylmethacrylate, polyethylhexylacrylate, polybutylacrylate, polyacrylonitrile, polyvinylpyrrolidone, polyvinylacetate, polyethylene, polypropylene, polyethylene-co-vinyl acetate, polyethylene oxide, polypropylene oxide, polyarylate, cyanoethylpullulan, cyanoethylpolyvinylalcohol or two or more of them. Specifically, the binder may include styrene butadiene rubber (SBR), nitrile butadiene rubber (NBR), polymethylmethacrylate, polyethylhexylacrylate, polybutylacrylate or a mixture thereof.

Meanwhile, in an embodiment of the present disclosure, the binder resin for the primer layer may have the glass transition temperature of 45°C or less to ensure time-dependent stability of the primer layer.

In a specific embodiment, the binder resin for the primer layer may include styrene butadiene rubber (SBR) having the glass transition temperature (Tg) of from -40°C to 45°C, nitrile butadiene rubber (NBR) having the glass transition temperature (Tg) of from -40°C to 45°C or a mixture thereof.

The conductive material for the primer layer is not limited to a particular type and may include any material having conductive properties without causing any chemical change in the corresponding battery, for example, graphite such as natural graphite or artificial graphite; a carbon black-based carbon compound such as carbon black, acetylene black, Ketjen black, channel black, furnace black, lamp black, thermal black; conductive fibers such as carbon fibers or metal fibers; fluorocarbon; metal powder such as aluminum powder, nickel powder; conductive whiskers such as zinc oxide, potassium titanate; conductive metal oxide such as titanium oxide; conductive materials such as polyphenylene derivatives, but specifically, to uniformly mix the conductive material and improve conductivity, the conductive material may include activated carbon, graphite, carbon black, carbon nanotubes or a mixture thereof, and more specifically, activated carbon.

In a specific embodiment of the present disclosure, the conductive material for the primer layer may include conductive materials having the specific surface area of from 30 m²/g to 1,400 m²/g and a spherical shape. In this instance, the size of primary particles of the spherical conductive material may be, for example, from 10 nm to 100 nm, specifically from 15 nm to 70 nm.

According to another embodiment of the present disclosure, the conductive material for the primer layer may include conductive materials of tubular shape having the specific surface area of from 10 m²/g to 400 m²/g. In this instance, the tubular conductive material may have a diameter of from 0.1 to 3 nm, specifically from 0.3 to 1.5 nm in cross section in a direction perpendicular to the length direction.

According to an embodiment of the present disclosure, the primer layer may include the above-described composition, and its thickness may be from 300 nm to 1.5 *µ*m, specifically from 700 nm to 1.3 *µ*m, but is not limited thereto.

### <Method for manufacturing electrode powder>

According to an embodiment of the present disclosure, the electrode powder may be manufactured by a method including the steps of mixing the electrode active material and the binder resin for the electrode with a dispersion medium to prepare a slurry; and spray drying the slurry.

First, the electrode active material and the electrode binder, and optionally the conductive material or an additive are dispersed or dissolved in the dispersion medium (the solvent for the negative electrode binder) to obtain the slurry in which the electrode conductive material and/or the additive is dispersed or dissolved together with the electrode active material and the electrode binder.

The dispersion medium used to obtain the slurry is, the most suitably, water, but an organic solvent may be used. The organic solvent may include, for example, alkylalcohols such as methylalcohol, ethylalcohol, propylalcohol; alkylketones such as acetone, methylethylketone; ethers such as tetrahydrofuran, dioxane, diglyme; amides such as diethylformamide, dimethylacetoamide, N-methyl-2-pyrrolidone (hereinafter referred to as NMP), dimethylimidazolidinone; sulfur-based solvents such as dimethylsulfoxide, sulfolane, but alcohols are preferred. When the organic solvent having lower boiling point than water is used together, the drying rate may increase during the flowable assembly. Additionally, since the dispersion or dissolution of the negative electrode binder may change, the viscosity or flowability of the slurry may be adjusted according to the amount or type of the dispersion medium, thereby improving the production efficiency.

The dispersion medium used to prepare the slurry may be present in such an amount that the solid concentration of the slurry is usually in a range between 1 and 50 wt%, or 5 and 50 wt%, or 10 and 30 wt%.

The method or order of dispersing or dissolving the electrode active material and the binder resin for the electrode in the dispersion medium is not particularly limited, and for example, the electrode active material and the electrode binder may be added to the dispersion medium and mixed up, or the electrode binder may be dissolved or dispersed in the dispersion medium, then the electrode active material may be added and mixed all together. When the slurry includes the conductive material and/or the additive, when feeding the electrode active material, these components may be fed. The mixing means may include, for example, a ball mill, a sand mill, a bead mill, a pigment dispersion machine, a stone mill, an ultrasonic dispersion machine, a homogenizer and a planetary mixer. The mixing may be, for example, performed in a range between room temperature and 80°C for 10 minutes to a few hours.

Subsequently, the slurry is spray dried. The spray drying method is a method that dries the slurry while spraying the slurry in hot air. A typical example of a device using the spray drying method may be an atomizer. There are two types of atomizers, a rotary atomizer and a pressurized atomizer. The rotary atomizer feeds the slurry into almost the center of the disc that rotates at high speed, urges the slurry to the periphery of the disc by the centrifugal force of the disc to create mist and dries it. The rotation rate of the disc relies on the size of the disc, but is usually from 5,000 rpm to 35,000 rpm, and preferably from 15,000 rpm to 30,000 rpm. Meanwhile, the pressurized atomizer applies the pressure to the slurry to spurt a mist through a nozzle and dries it.

The temperature of the slurry being sprayed is usually room temperature, but may be equal to or higher than room temperature by heating. During the spray drying, the hot air temperature is usually from 80°C to 250°C, preferably from 100°C to 200°C. In the spray drying method, the hot air suction method is not limited to a particular method, and may include, for example, a method of cocurrent flow of hot air and spray direction in the horizontal direction, a method of spraying from a drying tower top to cause it fall together with hot air, a method of countercurrent contact between sprayed droplets and hot air, a method of cocurrent flow of sprayed droplets and hot air, then fall by gravity and countercurrent contact.

Additionally, thermal treatment may be optionally performed to cure the surface of the result obtained by the spray drying, i.e., the electrode powder, and in this instance, the thermal treatment temperature may be usually from 80°C to 300°C.

The present disclosure provides a secondary battery including a battery case (a cylindrical case, a prismatic case, a pouch, etc.) accommodating an electrode assembly including the electrode and the separator obtained by the above-described method together with a lithium containing nonaqueous electrolyte, and an energy storage system including the secondary battery as a unit cell. In this instance, in the electrode, at least one of the positive electrode or the negative electrode may be the electrode obtained by the above-described method.

The separator may include a porous polymer film commonly used as separators, for example, a porous polymer film of polyolefin-based polymer such as ethylene homopolymer, propylene homopolymer, ethylene/butene copolymer, ethylene/hexene copolymer and ethylene/methacrylate copolymer as used singly or in stack. Additionally, an insulation thin film having high ion permeability and mechanical strength may be used. The separator may include a safety reinforced separator (SRS) having a thin coating of ceramic material on the separator surface. Besides, the separator may include commonly used porous nonwoven fabrics, for example, nonwoven fabrics of high melting point glass fibers, polyethyleneterephthalate fibers, but is not limited thereto.

The electrolyte solution includes a lithium salt as an electrolyte and an organic solvent to dissolve it.

The lithium salt may include, without limitation, those commonly used in electrolyte solutions for secondary batteries, and for example, an anion of the lithium salt may include at least one selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

The organic solvent included in the electrolyte solution may include any commonly used organic solvent without limitation, and typically may include at least one selected from the group consisting of propylene carbonate, ethylene carbonate, diethylcarbonate, dimethylcarbonate, ethylmethylcarbonate, methylpropylcarbonate, dipropylcarbonate, dimethylsulfoxide, acetonitrile, dimethoxyethane, diethoxyethane, vinylenecarbonate, sulfolane, gamma-butyrolactone, propylene sulfite and tetrahydrofuran.

In particular, among these carbonate-based organic solvents, cyclic carbonate such as ethylenecarbonate and propylenecarbonate is a high viscosity organic solvent and has a high dielectric constant, so it dissolves the lithium salt in the electrolyte well, and more preferably, when the cyclic carbonate is mixed with low viscosity and low dielectric constant linear carbonate such as dimethylcarbonate and diethylcarbonate at an optimal ratio, the electrolyte solution having high electrical conductivity may be prepared.

Optionally, the electrolyte solution stored according to the present disclosure may further include an additive such as an overvoltage preventing agent included in the commonly used electrolyte solutions.

The lithium secondary battery according to an embodiment of the present disclosure may be completed by placing the positive electrode and the negative electrode with the separator interposed between them to form the electrode assembly, putting the electrode assembly in, for example, a pouch, a cylindrical battery case or a prismatic battery case, and injecting the electrolyte. Alternatively, the lithium secondary battery may be completed by stacking the electrode assembly and immersing it in the electrolyte solution, placing the obtained result in the battery case, and sealing the battery case.

In this instance, the detailed structure of the secondary battery and the energy storage system is well known, and its description is omitted.

### [Explanation of reference numerals]

101 - Current collector
102 - Primer layer
103 - Electrode powder
104 - Electrode active material layer
111 - Electrode active portion
121 - Dam
200 - Damaged area
201 - Laser irradiation area
301 - Unwinder
302 - Rewinder
400 - Feeding process
401 - Feeder
500 - Sheeting process
501 - Sheeting roll
600 - Edge cleaning process
601 - Laser

## Claims

1. A method for manufacturing a dry electrode, comprising:
(S10) forming a primer layer having a predetermined width on at least one surface of a current collector;
(S20) forming a dam on two widthwise sides of the primer layer to prevent an electrode powder from flowing down;
(S30) feeding the electrode powder onto a surface of the primer layer; and
(S40) compressing the electrode powder to form an electrode active material layer.

2. The method for manufacturing the dry electrode according to claim 1, wherein the dam extends outward from the current collector surface, has a height that is greater than a height of the primer layer and is disposed in close contact with the sides of the primer layer without a gap.

3. The method for manufacturing the dry electrode according to claim 1, after the step (S40) is performed, further comprising: (S50) removing the electrode active material layer protruding out of the dam.

4. The method for manufacturing the dry electrode according to claim 3, wherein the step (S50) is performed by laser irradiation or knife type etching.

5. The method for manufacturing the dry electrode according to claim 1, wherein the dam includes a material that does not change physical and chemical properties of the primer layer and the electrode powder when it contacts the primer layer and the electrode powder.

6. The method for manufacturing the dry electrode according to claim 1, wherein the dam includes a polymer material.

7. The method for manufacturing the dry electrode according to claim 1, wherein the step (S20) is performed by printing.

8. The method for manufacturing the dry electrode according to claim 1, wherein the electrode powder includes an electrode active material and a binder resin for the electrode.

9. The method for manufacturing the dry electrode according to claim 8, wherein the electrode powder is produced by spray drying.

10. The method for manufacturing the dry electrode according to claim 1, wherein the primer layer includes a conductive material for the primer layer and a binder resin for the primer layer.

11. A dry electrode, obtained by the manufacturing method according to any one of claims 1 to 10, the dry electrode comprising:
the current collector, and the electrode active portion on at least one surface of the current collector,
wherein the electrode active portion includes the primer layer and the electrode active material layer on the primer layer, and
wherein the dam covers all or at least part of the side of the electrode active portion.

12. The dry electrode according to claim 11, wherein the dam has a height that is equal to or lower than the electrode active portion.

13. The dry electrode according to claim 11, wherein the dam includes a material that does not change physical and chemical properties of the primer layer and the electrode powder when it contacts the primer layer and the electrode powder.
